# EUROPÄISCHE PATENTANMELDUNG

(11) **EP 1 052 767 A2**
(43) Veröffentlichungstag der Anmeldung: **15.11.2000**
(21) Anmeldenummer: 00109534.8
(22) Anmeldetag: 04.05.2000
(51) Int. Cl.: H02P 6/22

(54) **Elektronisch kommutierbarer Motor**

(30) Priorität: 11.05.1999 DE 19921849
(71) Anmelder: ROBERT BOSCH GMBH, 70442 Stuttgart (DE)
(72) Erfinder: Berger, Rainer Josef, 42859 Remscheid (DE)

(57) **Zusammenfassung**

Die Erfindung betrifft einen elektronisch kommutierbaren Motor, dessen Erregerwicklungen über Halbleiter-Endstufen von einer elektronischen Steuereinheit mittels pulsmodulierter Steuersignale bestrombar sind und dabei im Stator des Motors ein Drehfeld erzeugen, das den Dauermagnet-Rotor des Motors in Drehbewegungen versetzt, bei dem zum Start des Motors in einer Startphase zuerst die Lage des Rotors zum Stator durch gleichzeitige Bestromung zweier Erregerwicklungen positioniert und nach der Positionierung durch Weiterschaltung auf andere Erregerwicklungen in Drehrichtung in Drehbewegung versetzt wird. Ein sanfter Start bei ungünstigen Bedingungen des Motors in der richtigen Drehrichtung wird ohne Lagesensoren dadurch erreicht, dass in der Startphase während einer Positionierphase zwei benachbarten Polen zugeordnete gleichsinnig gewickelte Erregerwicklungen bestromt werden, wobei sich das Pulsweitenverhältnis mit zunehmender Zeit kontinuierlich erhöht, und dass sich an die Positionierphase eine Beschleunigungsphase mit erhöhtem Pulsweitenverhältnis anschließt, in der die in Drehrichtung vorauseilende Erregerwicklung abgeschaltet und die zu dieser gegensinnig gewickelte Erregerwicklung dazu geschaltet wird.

## Beschreibung

### Stand der Technik

Die Erfindung betrifft einen elektronisch kommutierbaren Motor, dessen Erregerwicklungen über Halbleiter-Endstufen von einer elektronischen Steuereinheit mittels pulsmodulierter Steuersignale bestrombar sind und dabei im Stator des Motors ein Drehfeld erzeugen, das den Dauermagnet-Rotor des Motors in Drehbewegungen versetzt, bei dem zum Start des Motors in einer Startphase zuerst die Lage des Rotors zum Stator durch gleichzeitige Bestromung zweier Erregerwicklungen positioniert und nach der Positionierung durch Weiterschaltung auf andere Erregerwicklungen in Drehrichtung in Drehbewegung versetzt wird.

Bei elektronisch kommutierbaren Motoren Motoren ist es erforderlich, die Stellung des Dauermagnet-Rotors zu dem mit Erregerwicklungen versehenen Stator zu kennen, damit mit der vorgesehenen Kommutierung der Erregerwicklungen der Motor beim Start in der gewünschten Drehrichtung in Drehbewegungen versetzt wird.

Es sind derartige Motoren mit Lagesensoren bekannt, mit denen die Stellung des abgeschalteten Motors erkennbar gemacht wird. Diese Motoren erfordern nicht nur zusätzliche Lagesensoren, sie bedingen auch einen zusätzlichen Aufwand in der PWM-Steuereinheit.

Bei Motoren ohne Lagesensoren wird die Stellung zwischen Rotor und Stator durch Auswertung von in den Erregerwicklungen induzierten Spannungen erkannt. Da bei Stillstand des Motors jedoch keine auswertbaren Spannungen induziert werden, ist eine Lageerkennung im Stillstand des Motors nicht möglich. Bei einem Start der Bestimmung ist daher ein Anlaufen des Motors nicht sichergestellt, insbesondere nicht in der gewünschten Drehrichtung.

Wie die US 5,327,053 zeigt, kann ein elektronisch kommutierbarer Motor ohne Lagesensoren auch in der richtigen Drehrichtung gestartet werden, wenn in der Startphase durch abweichende Bestromung der Erregerwicklungen erst eine bestimmte Stellung zwischen Rotor und Stator hergestellt und danach erst mit der üblichen Bestromung begonnen wird. Dabei werden zu Beginn zwei Erregerwicklungen gleichzeitig voll bestromt und da-nach erfolgt die zur Erzeugung des Drehfeldes mit der gewünschten Drehrichtung erforderliche Bestromung.

Dabei hat es sich jedoch gezeigt, dass der Anlauf des Motors ruckartig erfolgt und die gewählte Ansteuerung der Erregerwicklungen nur bei relativ geringem Massenträgheitsmoment, hohem Rastmoment und stark bedampftem Motorsystem zu einem sicheren Start führt.

Es ist Aufgabe der Erfindung, bei einem elektronisch kommutierbaren Motor der eingangs erwähnten Art einen sanften, gleichmäßigen Start des Motors auch bei hohem Massenträgheitsmoment, kleinem Rastmoment und geringer Bedämpfung des Motorsystems sicher zu stellen.

Diese Aufgabe wird nach der Erfindung dadurch gelöst, das in der Startphase während einer Positionierphase zwei benachbarten Polen zugeordnete gleichsinnig gewickelte Erregerwicklungen bestromt werden, wobei sich das Pulsweitenverhältnis mit zunehmender Zeit kontinuierlich erhöht, und dass sich an die Positionierphase eine Beschleunigungsphase mit erhöhtem Pulsweitenverhältnis anschließt, in der die in Drehrichtung vorauseilende Erregerwicklung abgeschaltet und die zu dieser gegensinnig gewickelte Erregerwicklung dazugeschaltet wird.

Mit der Positionsphase, in der das Pulsweitenverhältnis kontinuierlich erhöht wird, wird eine sanfte Positionierung und entsprechend auch ein sanfter Anlauf des Motors erreicht, der in der anschließenden Beschleunigungsphase beschleunigt wird und in den Dauerlauf übergeht.

Gute Ergebnisse lassen sich nach einer Ausgestaltung dadurch erreichen, dass die Positionierphase mit 1000 bis 1500 ms gewählt ist, sowie dass die Beschleunigungsphase mit etwa 10 ms gewählt ist, wobei auch ein schneller Anlauf gewährleistet ist.

Der Aufwand in der Steuereinheit läßt sich dabei dadurch klein halten, dass die Startphase mit Positionierphase und Beschleunigungsphase als Software in einem Mikrocomputer der Steuereinheit abgelegt ist.

Eine Anpassung der Startbedingungen des Motors läßt sich dadurch auf einfache Weise erreichen, dass die Positionier- und die Beschleunigungsphase automatisch an Betriebszustände angepaßt werden. Dabei ist nach einer Ausgestaltung vorgesehen, dass die Zeiten und das Pulsweitenverhältnis der Positionierphase und der Beschleunigungsphase von der Betriebsspannung der Temperatur und der Toleranz der Motordaten abhängig ist.

Die Erfindung wird anhand eines in den Zeichnungen dargestellten Ausführungsbeispiels näher erläutert. Es zeigen:
- Fig. 1: einen 2-strangigen, 4-pulsigen Motor,
- Fig. 2: schematisch die Ansteuerung der vier Erregerwicklungen des Motors nach Fig. 1 und
- Fig. 3: den Verlauf des Pulsweitenverhältnisses in der Startphase.

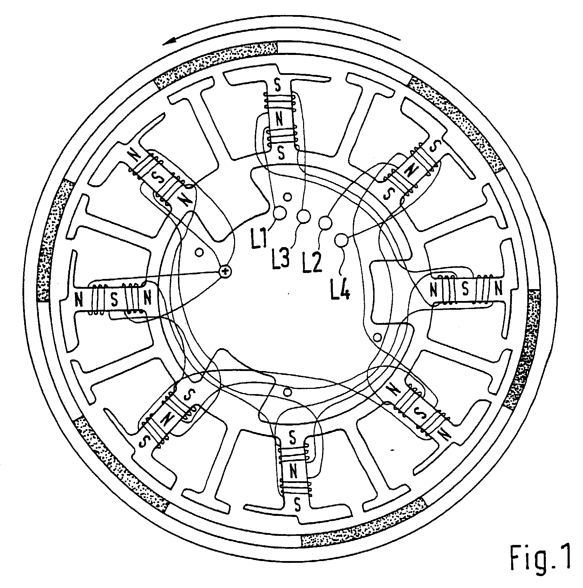

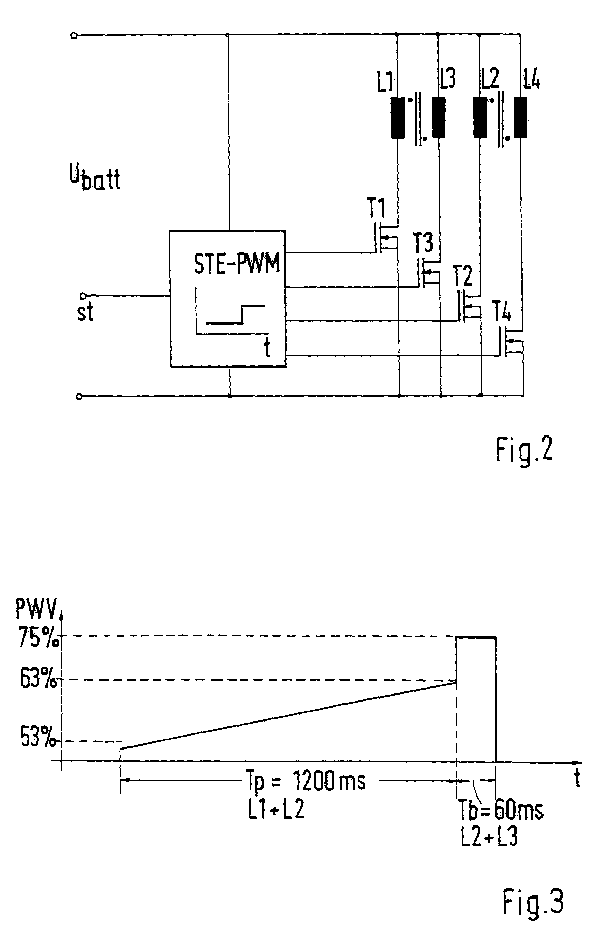

Der Aufbau eines 2-strangigen, 4-pulsigen Motors ist in Fig. 1 dargestellt. Dabei ist zur Erzeugung eines Drehfeldes im Stator für die durch den Pfeil angezeigte Drehrichtung eine Steuereinheit STE-PWM erforderlich, wie Fig. 2 zeigt.

Der Stator weist acht Pole auf, zwischen denen jeweils ein nicht bewickelter Zwischenpol angeordnet ist. Die Erregerwicklungen L1, L2, L3 und L4 sind, wie aus Fig. 1 erkennbar ist, jeweils mit vier Teilwicklungen versehen, die auf vier Pole verteilt sind. Dabei wechselt der Wickelsinn von Teilwicklung zu Teilwicklung und die Teilwicklungen einer Erregerwicklung sind auf Pole verteilt, zwischen denen jeweils ein nicht davon belegter Pol angeordnet ist. Hinzu kommt, dass die Erregerwicklungen L1 und L3 bzw. L2 und L4 dieselben Pole erfassen, jedoch auf jedem Pol jeweils gegenläufige Wickelsinne aufweisen.

Werden diese Erregerwicklungen L1 bis L4 zeitlich nacheinander von der Steuereinheit STE-PWM bestimmt, dann entsteht das gewünschte Drehfeld im Stator.

Wie das Schaltbild nach Fig. 2 zeigt, werden die Erregerwicklungen L1 bis L4 über Halbleiter-Endstufen T1 bis T4 ein- und ausgeschaltet, d.h. mit der Versorgungsgleichspannung U_{batt} verbunden und von dieser getrennt. Wie in der Steuereinheit STE-PWM angedeutet ist, erfolgt die Ansteuerung über pulsweitenmodulierte Steuersignale und beim Start des Motors in einer aus Positionsphase Tp und anschließender Beschleunigungsphase Tb bestehenden Startphase, die sich über eine vorgegebene oder vorgebbare Zeit erstreckt, wie das Zeitdiagramm nach Fig. 3 zeigt. Dabei kann die Positionsphase Tp z.B. 1200 ms und die Beschleunigungsphase Tb z.B. 10 ms betragen.

In der Positionsphase Tp werden die Erregerwicklungen L1 und L2 benachbarter Pole gleichzeitig gleichsinnig bestromt, wobei das Pulsweitenverhältnis PWV kontinuierlich auf z.B. 63 % ansteigt. Diese Positionsphase Tp reicht aus, den Motor in Drehrichtung sanft in eine vorgegebene Position zu bringen, aus der er mit der anschließenden Beschleunigungsphase Tb in der Drehzahl beschleunigt wird. Dabei wird in der Beschleunigungsphase Tb das Pulsweitenverhältnis auf z.B. 75 % erhöht. Damit der Anlauf in der gewünschten Drehrichtung weiter geführt wird, wird die Erregerwicklung L1 in der Beschleunigungsphase Tb abgeschaltet und die Erregerwicklung L3 bei eingeschalteter Erregerwicklung L2 dazugeschaltet.

Nach der Beschleunigungsphase Tb werden die Erregerwicklungen L1 bis L4 von der Steuereinheit STE-PWM in bekannter Weise in aufeinander folgenden Steuerphasen bestimmt, was zum Dauerlauf des Motors führt.

Die Startphase mit der Positionsphase Tp und der Beschleunigungsphase Tb sind als Software in einem Mikrocomputer der Steuereinheit STE-PWM abgelegt, wie die Steuerphasen des Dauerlaufes.

## Patentansprüche

1. Elektronisch kommutierbarer Motor, dessen Erregerwicklungen über Halbleiter-Endstufen von einer elektronischen Steuereinheit mittels pulsmodulierter Steuersignale bestrombar sind und dabei im Stator des Motors ein Drehfeld erzeugen, das den Dauermagnet-Rotor des Motors in Drehbewegungen versetzt, bei dem zum Start des Motors in einer Startphase zuerst die Lage des Rotors zum Stator durch gleichzeitige Bestromung zweier Erregerwicklungen positioniert und nach der Positionierung durch Weiterschaltung auf andere Erregerwicklungen in Drehrichtung in Drehbewegung versetzt wird,
dadurch gekennzeichnet,
dass in der Startphase während einer Positionierphase (Tp) zwei benachbarten Polen zugeordnete gleichsinnig gewickelte Erregerwicklungen (L1,L2) bestromt werden, wobei sich das Pulsweitenverhältnis (PWV) mit zunehmender Zeit kontinuierlich erhöht, und
dass sich an die Positionierphase (Tp) eine Beschleunigungsphase (Tb) mit erhöhtem Pulsweitenverhältnis (PWM) anschließt, in der die in Drehrichtung vorauseilende Erregerwicklung (L1) abgeschaltet und die zu dieser gegensinnig gewickelte Erregerwicklung (L3) dazu geschaltet wird.

2. Elektronisch kommutierbarer Motor nach Anspruch 1,
dadurch gekennzeichnet,
dass die Positionierphase (Tp) mit 1000 bis 1500 ms gewählt ist.

3. Elektronisch kommutierbarer Motor nach Anspruch 1 oder 2,
dadurch gekennzeichnet,
dass die Beschleunigungsphase (Tb) mit etwa 10 ms gewählt ist.

4. Elektronisch kommutierbarer Motor nach einem der Ansprüche 1 bis 3, dadurch gekennzeichnet,
dass die Startphase mit Positionierphase (Tp) und Beschleunigungsphase (Tb) als Software in einem Mikrocomputer der Steuereinheit (STE-PWM) abgelegt ist.

5. Elektronisch kommutierbarer Motor nach Anspruch 1, 2 oder 3,
dadurch gekennzeichnet,
dass die Positionier- (TP) und die Beschleunigungsphase (Tb) automatisch an Betriebszustände angepasst werden.

6. Elektronisch kommutierbarer Motor nach Anspruch 5,
dadurch gekennzeichnet,
dass die Zeiten und das Pulsweitenverhältnis der Positionierphase (Tp) und der Beschleunigungsphase (Tb) von der Betriebsspannung (U_{batt}) der Temperatur und der Toleranz der Motordaten abhängig ist.
